# EUROPÄISCHE PATENTSCHRIFT

(11) **EP 0 862 588 B1**
(45) Veröffentlichungstag und Bekanntmachung des Hinweises auf die Patenterteilung: **21.08.2002**
(21) Anmeldenummer: 96939090.5
(22) Anmeldetag: 18.11.1996
(51) Int. Cl.: C08F 10/00, C08F 4/24, C08F 4/69

(54) **MIT ORGANISCHEN VERBINDUNGEN REDUZIERTE PHILLIPS-KATALYSATOREN MIT KURZER INDUKTIONSZEIT**
PHILLIPS CATALYSTS REDUCED WITH ORGANIC COMPOUNDS AND POSSESSING SHORT INDUCTION TIMES
CATALYSEURS DE PHILLIPS A FAIBLE TEMPS D'INDUCTION REDUITS AVEC DES COMPOSES ORGANIQUES

(30) Priorität: 21.11.1995 DE 19543294
(43) Veröffentlichungstag der Anmeldung: 09.09.1998
(73) Patentinhaber: Basell Polyolefine GmbH, 77694 Kehl (DE)
(72) Erfinder: ROHDE, Wolfgang, D-67346 Speyer (DE)
(86) Internationale Anmeldenummer: EP9605070
(87) Internationale Veröffentlichungsnummer: WO97019115

(56) Entgegenhaltungen:
- EP-A- 0 000 751
- US-A- 4 547 479

## Beschreibung

Die vorliegende Erfindung betrifft Katalysatorsysteme, welche für die Polymerisation von Ethylen und Alk-1-enen geeignet sind, enthaltend als aktive Bestandteile
A) eine chromhaltige Komponente, erhältlich durch die Reduktion eines Phillips-Katalysators mit organischen Verbindungen ausgewählt aus der Gruppe der linearen C₄- bis C₁₀- oder cyclischen C₃-bis C₁₀-Alkene mit mindestens einer internen C=C-Doppelbindung, des 1,3-Butadiens, der C₂- bis C₁₀-Alkine und der C₁- bis C₁₀-Aldehyde,
   und gegebenenfalls
B) eine Organometallverbindung der ersten, zweiten, dritten oder vierten Hauptgruppe oder der zweiten Nebengruppe des Periodensystems der Elemente.

Weiterhin betrifft die vorliegende Erfindung ein Verfahren zur Herstellung der eingangs definierten Katalysatorsysteme durch Beladung eines porösen anorganischen Feststoffs mit einer Chromverbindung, Oxidation des so erhältlichen Feststoffs und Behandlung des oxidierten Feststoffs mit einem Reduktionsmittel, ein Verfahren zur Herstellung von Poly(alk-1-enen) durch Polymerisation von Alk-1-enen in Gegenwart eines reduzierten Phillips-Katalysatorsystems.

Olefinpolymerisations-Katalysatoren auf der Basis von auf porösen Feststoffen fixierten, oxidierten Chromverbindungen, sogenannte Phillips-Katalysatoren, sind bekannt und werden vor allem für die Polymerisation von Ethylen oder die Copolymerisation von Ethylen mit Alk-1-enen eingesetzt. Die Polymerisate sind wichtige Ausgangsstoffe zur Herstellung von Folien und Formkörpern aller Art.

Oxidativ erhaltene, körnige Phillips-Katalysatoren sind im allgemeinen innerhalb einer bestimmten Zeitspanne, meist einige Minuten, nicht polymerisationsaktiv, auch wenn sie bereits mit dem Monomeren im Kontakt sind. Erst nach einer sogenannten Induktionsperiode beginnt die Polymerisation und die Katalysatorkörner können sich mit einer schützenden Polymerhülle umgeben.

Innerhalb der Induktionsperiode werden aber schon sehr viele ungeschützte Katalysatorkörner durch die, im Polymerisationsreaktor herrschenden, Scherkräfte zerrieben. Dieser Katalysatorabrieb führt zu unerwünschtem Polymerfeinstaub im Polymerisat.

Insbesondere bei Gasphasenwirbelschichtreaktoren beobachtet man darüber hinaus, daß der zerriebene Katalysator aus dem Wirbelbett in das Kreisgassystem hineingetragen wird und erst dort anfängt zu polymerisieren, was wiederum zu unerwünschten Polymerablagerungen in Kühlern führt.

Die Induktionsperiode kann verkürzt werden, so daß sich das Katalysatorkorn schneller mit einer Polymerschutzhülle überziehen kann, wenn man die oxidativ erhaltenen Katalysatoren mit Kohlenmonoxid (Inorg. Nucl. Chem. Lett. (1968), 4, 393) oder mit Wasserstoff (J. Polym. Sci., Part A1, (1970), 8, 2637) reduziert.

Nachteilig an beiden Methoden ist aber, daß die Reduktionsmittel im großen Überschuß eingesetzt werden müssen und ihre Reaktionsprodukte, Kohlendioxid und Wasser, Katalysatorgifte sind. Weiterhin führt die hohe Toxizität von Kohlenmonoxid und die große Explosivität von Wasserstoff bei der großtechnischen Polymerisation zu erheblichem Sicherheitsaufwand.

Der vorliegenden Erfindung lag daher die Aufgabe zugrunde, die oben genannten Nachteile zu überwinden und vor allem Katalysatorsysteme für die Alk-1-enpolymerisation zur Verfügung zu stellen, welche eine kurze Induktionsperiode haben und sich wenig aufwendig herstellen lassen.

Demgemäß wurden die eingangs definierten Katalysatorsysteme, ein Verfahren zur Herstellung dieser Katalysatorsysteme, ein Verfahren zur Herstellung von Poly(alk-1-enen) unter Verwendung der definierten Katalysatorsysteme gefunden.

Die Vorstufe der erfindungsgemäßen Katalysatorsysteme ist in der Regel ein üblicher, oxidativ hergestellter Phillips-Katalysator, wie er beispielsweise in DE-A 25 40 279 oder EP-A O 429 937 beschrieben ist.

Vereinfachend dargestellt wird er im allgemeinen durch Tränken einer Trägersubstanz mit einer chromhaltigen Lösung, wie Chrom(III)nitrat in Wasser oder Methanol, Chrom(III)acetat in Wasser oder Methanol oder Chrom(VI) oxid in Wasser, Verdampfen des Lösungsmittels und Erhitzen des Feststoffs unter oxidierenden Bedingungen, beispielsweise in einer sauerstoffhaltigen Atmosphäre, auf 400 bis 1000°C erhalten. Diese Oxidation kann in Gegenwart geeigneter Fluorierungsmittel, beispielsweise Ammoniumhexafluorsilikat, erfolgen.

Das Trägermaterial ist üblicherweise ein poröser anorganischer Feststoff der noch Hydroxygruppen enthalten kann. Beispiele für diese Feststoffe, die im übrigen dem Fachmann bekannt sind, sind Aluminiumoxid, Siliziumdioxid (Silicagel), Titandioxid oder deren Mischoxide, oder Aluminiumphosphat. Weitere geeignete Trägermaterialien können durch Modifizierung der Porenoberfläche mit Verbindungen der Elemente Bor (BE-A-861,275), Aluminium (DE-A 36 35 710), Silizium (EP-A 0 166 157), Phosphor (DE-A 36 35 710) oder Titan (US 4 284 527) erhalten werden. Das Trägermaterial kann unter oxidierenden oder nicht-oxidierenden Bedingungen bei Temperaturen von 200 bis 1000°C, gegebenenfalls in Gegenwart von Fluorierungsmitteln, wie Ammoniumhexafluorsilikat, behandelt werden.

Die für die Reduktion der oxidativ hergestellten Phillips-Katalysators geeigneten organischen Verbindungen sind lineare C₄- bis C₁₀- oder cyclische C₃- bis C₁₀ -Alkene mit mindestens einer internen C=C-Doppelbindung, 1,3-Butadien, C₂- bis C₁₀-Alkine oder C₁- bis C₁₀-Aldehyde.

Als interne C=C-Doppelbindungen werden solche bezeichnet, welche vicinal mit Kohlenstoffatomen substituiert sind.

Die jeweilige, für die Stoffgruppe charakteristische funktionelle Gruppe kann in einem Molekül auch mehrfach enthalten sein; dies gilt zum Beispiel für Diene und Polyene. Weiterhin sind auch Verbindungen geeignet, welche verschiedene funktionelle Gruppen haben, beispielsweise olefinisch oder acetylenisch ungesättigte Aldehyde oder olefinisch substituierte Alkine.

Des weiteren sind auch Stoffmischungen der jeweiligen Reinsubstanzen geeignet zum Beispiel Alkin/Alken, Alken/Aldehyd, Alkin/Aldehyd.

Ethylen und C₃- bis C₁₀-Alk-1-ene sind keine geeigneten Reduktionsmittel im Sinne der Erfindung.

Gut geeignete Alkene sind lineare oder auch verzweigte, C₄- bis C₁₀ -Alkene mit mindestens einer internen C=C-Doppelbindung, wie E- oder Z-2-Buten, E- oder Z-2-Penten, E- oder Z-2-Hexen, E- oder Z-3-Hexen, 2,3-Dimethyl-2-Buten oder auch aromatisch substituierte Alkene wie E- oder-Z-Stilben. Weiterhin eignen sich cyclische oder multicyclische Alkene mit 3 bis 10 Kohlenstoffatomen wie Cyclopropen, Cyclobuten, Cyclopenten, Cyclohexen, Norbornen sowie Diene, beispielsweise 2,4-Hexadien (jeweils die E- und Z-Isomere), 1,4-Cyclooctadien (jeweils die E- und Z-Isomere), Norbornadien, 1,3-Cyclopentadien, 4,7-Methylen-4,7,8,9-tetrahydroinden (Dicyclopentadien), Cyclododeca-1,5,9-trien (jeweils E-und Z-Isomere).

Vorzugsweise verwendet man 2,3-Dimethyl-2-Buten, Cyclohexen oder Norbornen als interne Alkene.

Gut geeignete Alkine sind solche mit 2 bis 10 Kohlenstoffatomen und terminalen oder internen Dreifachbindungen oder beides, wie Ethin, Propin, 1-Butin, 2-Butin, 1-Hexin 2-Hexin, 3-Hexin; Vorzugsweise verwendet man Monoalkine wie Propin, 1-Butin, 1-Hexin, 2-Hexin, 3-Hexin insbesondere 1-Hexin.

Auch die sonst als Katalysatorgifte fungierenden Aldehyde sind als Reduktionsmittel gut geeignet, wie C₁- bis C₁₀-Aldehyde beispielsweise Formaldehyd, Acetaldehyd, Propionaldehyd, Butyraldehyd, Pentanal, Hexanal, Benzaldehyd, Pivaldehyd. Vorzugsweise verwendet man Formaldehyd.

Das molare Verhältnis Reduktionsmittel:Chrom des zu reduzierenden Phillips-Katalysators liegt üblicherweise im Bereich von 0,05:1 bis 500:1, vorzugsweise 0,1:1 bis 50:1, insbesondere 0,5:1 bis 5,0:1.

Die Reduktionsmittel können auch in beliebiger Mischung eingesetzt werden, wobei das Mischungsverhältnis im allgemeinen nicht kritisch ist.

Die Reduktion des Phillips-Katalysators kann in Suspension oder in der Gasphase durchgeführt werden.

Als Suspensionsmittel eignen sich C₄- bis C₈-Alkane wie Isobutan, Isopentan, n-Pentan, n-Hexan, n-Heptan oder n-Octan.

Die Reduktionstemperatur in Suspension liegt im allgemeinen im Bereich von 10 bis 200°C, vorzugsweise im Bereich von 10 bis 100°C.

Der Druck bei der Reduktion des Phillips-Katalysators in Suspension liegt üblicherweise im Bereich von 100 bis 5000 kPa, vorzugsweise im Bereich von 100 bis 2000 kPa.

Sehr gut geeignet für die Reduktion der Phillips-Katalysatoren ist das Gasphasenverfahren, insbesondere für die Herstellung von Katalysatoren, die trocken zur Polymerisation verwendet werden können.

Bei der Gasphasenreduktion wird im allgemeinen der zu reduzierende Phillips-Katalysator in einem Wirbelbettreaktor mit einem inerten Trägergasstrom, beispielsweise Stickstoff oder Argon, gewirbelt.

Der Trägergasstrom wird üblicherweise mit dem Reduktionsmittel beladen, wobei unter Normalbedingungen flüssige Reduktionsmittel vorzugsweise einen Dampfdruck unter Normalbedingungen von mindestens 0,1 kPa haben.

Die Reduktionstemperatur im Wirbelschichtverfahren liegt üblicherweise im Bereich von 10 bis 1000°C, vorzugsweise 10 bis 800°C, insbesondere 10 bis 600°C. In der Regel führt man die Gasphasenreduktion im Druckbereich von 0,1 bis 5000 kPa, vorzugsweise im Bereich von 1 bis 1000 kPa und insbesondere im Bereich von 50 bis 200 kPa durch.

In bevorzugten Ausführungsformen können die Reduktionen in der Gasphase oder Suspension nicht nur bei einer festgelegten Temperatur sondern vorteilhaft innerhalb eines Temperaturprogramms mit variabler Temperaturführung ausgeführt werden.

Hierzu bringt man den zu reduzierenden Phillips-Katalysator mit dem Reduktionsmittel bei niedriger Temperatur in Kontakt und erhöht die Temperatur z.B. linear mit Heizraten von 0,5°C bis 50°C/min vorzugsweise 1 bis 10°C/min. Temperaturstartund Endwerte liegen üblicherweise im Bereich von 10 bis 1000°C, vorzugsweise im Bereich von 10 bis 800°C und insbesondere im Bereich von 10 bis 600°C.

Besonders günstige Temperaturen für die Gasphasenreduktion von Phillips-Katalysatoren mit den erfindungsgemäßen Reduktionsmitteln liegen im Bereich von 150 bis 300°C, insbesondere im Bereich von 200 bis 300°C.

Die erfindungsgemäßen Katalysatoren eignen sich sehr gut für die Polymerisation und Oligomerisation von Alk-1-enen vorzugsweise C₂- bis C₁₀-Alk-1-enen wie Ethylen, Propen, 1-Buten, 1-Penten, 1-Hexen, 1-Hepten, 1-Octen, 1-Nonen oder 1-Decen.

Insbesondere kann Ethylen homopolymerisiert oder mit C₃- bis C₁₀-Alk-1-enen copolymerisiert werden, so zum Beispiel mit Propen, 1-Buten, 1-Hexen, 1-Octen oder 1-Decen oder Mischungen dieser Comonomeren, wobei das Mischungsverhältnis nicht kritisch ist.

Der chemisch gebundene Comonomerengehalt der Ethylen/Alk-1-encopolymerisate, gemessen mit der Methode der ¹³C-NMR-Spektroskopie ( J. Macromol. Sci., Rev. Macromol. Chem. Phys. (1989) C29 (2/3)), liegt üblicherweise im Bereich von 0,1 bis 2 mol-% vom Alk-1-en abgeleiteten Einheiten.

Der Schmelzflußindex der Poly(alk-1-ene), gemessen nach DIN 53735, bei 190°C, 21,6 kg Auflagegewicht, beträgt im allgemeinen 0,1 bis 40 g/10 min., vorzugsweise 2 bis 25 g/10 min.

Die mit dem erfindungsgemäßen Katalysatorsystem erhältlichen Polymerisate zeichnen sich gegenüber den mit üblichen Phillips-Katalysatoren oder mit Kohlenmonoxid-reduzierten Phillips-Katalysatoren erhältlichen Polymerisaten durch erhöhte mittlere Molekulargewichte Mw aus. Sie liegen für die erfindungsgemäßen Polymerisate im allgemeinen im Bereich von 200 000 bis 5 000 000, gemessen mit der Methode der Gelpermeationschromatographie (GPC) bei 135°C in 1,2,4-Trichlorbenzol (Polyethylenstandard).

Die Molekulargewichtsverteilung Mw/Mn der erfindungsgemäßen Polymerisate, gemessen mit der Methode der GPC wie oben beschrieben, liegt üblicherweise im Bereich von 7 bis 100.

Die Polymerisationen der Alk-1-ene können in den üblichen, für die Polymerisation von Olefinen bekannten Verfahren, wie Lösungsverfahren, Suspensionsverfahren, gerührte Gasphase oder Gasphasenwirbelschichtverfahren, kontinuierlich oder auch diskontinuierlich durchgeführt werden. Als Lösungsmittel oder Suspensionsmittel können inerte Kohlenwasserstoffe, wie isoButan, oder aber die Monomeren selbst verwendet werden.

Der Druck beträgt im allgemeinen 100 bis 10000 kPa, vorzugsweise 1000 bis 6000 kPa und die Temperatur liegt im allgemeinen im Bereich von 10 bis 150°C, vorzugsweise im Bereich von 30 bis 125°C.

Besonders gut geeignete Verfahren zur Herstellung der erfindungsgemäßen Polymeren sind das Suspensionsverfahren und das Gasphasenwirbelschichtverfahren.

Zur Steuerung der Molekulargewichte kann vorteilhaft Wasserstoff als Reglersubstanz bei der Polymerisation eingesetzt werden. Es hat sich als vorteilhaft erwiesen, die Polymerisation der Alk-1-ene mit den erfindungsgemäßen reduzierten Katalysatoren in Gegenwart von Organometallverbindungen der ersten, zweiten, dritten oder vierten Hauptgruppe oder der zweiten Nebengruppe des Periodensystems der Elemente durchzuführen. Gut geeignete derartige Verbindungen sind homoleptische C₁- bis C₁₀-Alkyle des Lithiums, Bors, Aluminiums oder Zinks wie n-Butyllithium, Triethylbor, Triethylaluminium, Triisobutylaluminium, Trihexylaluminium, Trioctylaluminium und Diethylzink. Ferner sind auch noch C₁- bis C₁₀-Dialkylaluminiumalkoxide wie Diethylaluminiumethoxid gut geeignet. Besonders bevorzugt ist n-Butyllithium als Organometallverbindung. Auch Mischungen der oben beschriebenen Organometallverbindungen sind im allgemeinen gut geeignet, wobei das Mischungsverhältnis nicht kritisch ist.

Das molare Verhältnis Organometallverbindung:Chrom liegt üblicherweise im Bereich von 0,1:1 bis 50:1, vorzugsweise im Bereich von 1:1 bis 50:1

Die erfindungsgemäßen Katalysatorsysteme zeichnen sich durch eine geringe Induktionsperiode bei der Alk-1-enpolymerisation aus. Es war nicht zu erwarten, daß die erfindungsgemäßen Reduktionsmittel, die sonst eher als Katalysatorgifte bekannt sind, Katalysatorsysteme mit guten Eigenschaften liefern.

Die mit den erfindungsgemäßen Katalysatorsystemen erhältlichen Polymerisate von Alk-1-enen haben im allgemeinen hohe Molekulargewichte Mw. Sie lassen sich vorteilhaft zu Folien und Formkörper weiterverarbeiten.

### Beispiele

Die in den folgenden Beispielen beschriebenen Polymerisationen wurden mit einem Phillips-Katalysator ausgeführt, welcher nach der in DE-A 25 40 279, insbesondere Beispiel, beschriebenen Vorschrift hergestellt wurde. Der Katalysator wurde bei 750°C in Luft aktiviert und danach mit den jeweiligen Reduktionsmitteln reduziert (siehe Tabellen).

### Beispiel 1, 2 und Vergleichsbeispiel V1

Homo-Polymerisation von 1-Hexen mit in Suspension vorreduzierten Katalysatoren

Zur Polymerisation von 1-Hexen wurden jeweils 5 g Phillips-Katalysator in 100 ml getrocknetem Heptan suspendiert. Nach dem Aufheizen auf 90°C wurde das jeweilige Reduktionsmittel bezogen auf den Chrom-Gehalt des Katalysators im Molverhältnis von 1:1 hinzugefügt und 1 h lang gerührt. Schließlich wurden jeweils 20 ml 1-Hexen in den Reaktor gegeben und die Polymerisation bei 90°C durchgeführt. Die Polymerisation wurde nach 10 Minuten durch Zugabe von Methanol abgebrochen. Der Katalysator wurde durch Filtrieren abgetrennt, das Filtrat im Vakuum eingeengt und die Polymerausbeute durch Auswaage des Eindampfrückstandes bestimmt. (Ergebnisse siehe Tabelle 1). V1 wurde mit einem Phillips-Katalysator, der nicht vorreduziert wurde, durchgeführt.

**Tabelle 1:**

| Suspensionsreduktion und 1-Hexenpolymerisation | | |
|---|---|---|
| Beispiel | Reduktionsmittel (ml/mmol) | Umsatz (%) 1-Hexen zu Poly(1-Hexen) nach 10 Minuten |
| 1 | Cyclohexen (0,10/1) | 33,4 |
| 2 | Norbornen (0,09/1) | 48,2 |
| V1 | - | 30,4 |

### Beispiele 3 bis 7

Polymerisation von 1-Hexen mit in der Gasphase vorreduzierten Phillips-Katalysatoren

Die Reduktion der Phillips-Katalysatoren erfolgte in einem Wirbelbettreaktor. Zunächst wurden 20 g des oxidiativ hergestellten Katalysators im Argon-Strom gewirbelt. Sodann wurde das Reduktionsmittel bezogen auf den Chrom-Gehalt des Katalysators im Molverhältnis von 1:1 über einen zweiten Argon-Strom in den Hauptstrom zugemischt und 15 min. bei 23°C mit dem Katalysator gewirbelt. Anschließend wurden die Katalysatoren innerhalb von 10 Minuten auf die in Tabelle 2 angegebenen Temperaturen erhitzt.

Die Katalysatoren wurden bei diesen Temperaturen eine Stunde lang im Argon-Wirbelstrom belassen.

Die so erhältlichen Katalysatoren wurden dann analog Beispiel 1 zur Polymerisation von 1-Hexen eingesetzt (siehe Tabelle 2).

**Tabelle 2:**

| Gasphasenreduktion und 1-Hexenpolymerisation | | | |
|---|---|---|---|
| Beispiel | Reduktionsmittel (g, mmol) | Heiztemperatur (°C) | Umsatz (Gew.-%) 1-Hexen zu Poly(1-Hexen) |
| 3 | Norbornen(0,36/3,8) | 200 | 62,3 |
| 4 | Cyclohexen(0,31/3,8) | 200 | 70,5 |
| 5 | 2,3-Dimethyl-2-Buten (0,34/3,8) | 200 | 51,9 |
| 6 | 1-Hexin(0,31/3,8) | 200 | 51,1 |
| 7a) | Formaldehyd (0,44/14,7) | 300 | 63,8 |
| a) Chrom : Formaldehyd = 1:4 | | | |

Die Beispiele 3 bis 7 zeigen, daß die in der Gasphase vorreduzierten Katalysatoren eine höhere Produktivität als der nicht-vorreduzierte Katalysator aus dem Vergleichsbeispiel V1 besitzen. Aus den Beispielen 6 und 7 wird ersichtlich, daß auch mit Alkinen oder Formaldehyd, die gemeinhin als Katalysatorgifte gelten, aktive Katalysatoren erhalten werden können.

Der in der Tabelle angegebene Umsatz von 1-Hexen zu Poly(1-Hexen in Gew.-% korreliert mit der Katalysatorproduktivität (Umsatz pro Zeiteinheit) und mit der Induktionsperiode der Katalysatoren. Eine geringe Induktionsperiode bedeutet hohen Umsatz und vice versa.

### Beispiele 8 bis 11 und Vergleichsbeispiel V2

Polymerisation von Ethylen mit in der Gasphase reduzierten Phillips-Katalysatoren

Die Reduktion der Katalysatoren erfolgte nach dem in den Beispielen 4 und 7 beschriebenen Verfahren.

In einem 1 l Stahlautoklav wurden 500 ml Isobutan und 20 ml (20 mmol) n-Butyllithium 1 M in Hexan vorgelegt, auf 90°C aufgeheizt und Ethylen bis zu einem Gesamtenddruck von 4000 kPa dosiert. Bei einigen Versuchen wurde Wasserstoff mit einem Anfangspartialdruck von 300 kPa dosiert.

Dann wurden 100 mg des reduzierten Phillips-Katalysators dosiert und es wurde 90 Minuten lang polymerisiert. Nach Verminderung des Autoklavendrucks auf Umgebungsdruck wurde das Polymerisat isoliert.

Unter der in Tabelle 3 angegebenen Induktionszeit versteht man die Zeitspanne von der Dosierung des Katalysators in den Polymerisationsautoklav bis zu dem Zeitpunkt an dem die ersten zwei Normliter Ethylen im Autoklav verbraucht waren.

Die Produktivität des Katalysators P/K bezieht sich auf die Menge isoliertes Polymerisat/Menge reduziertem Phillips-Katalysator in g.

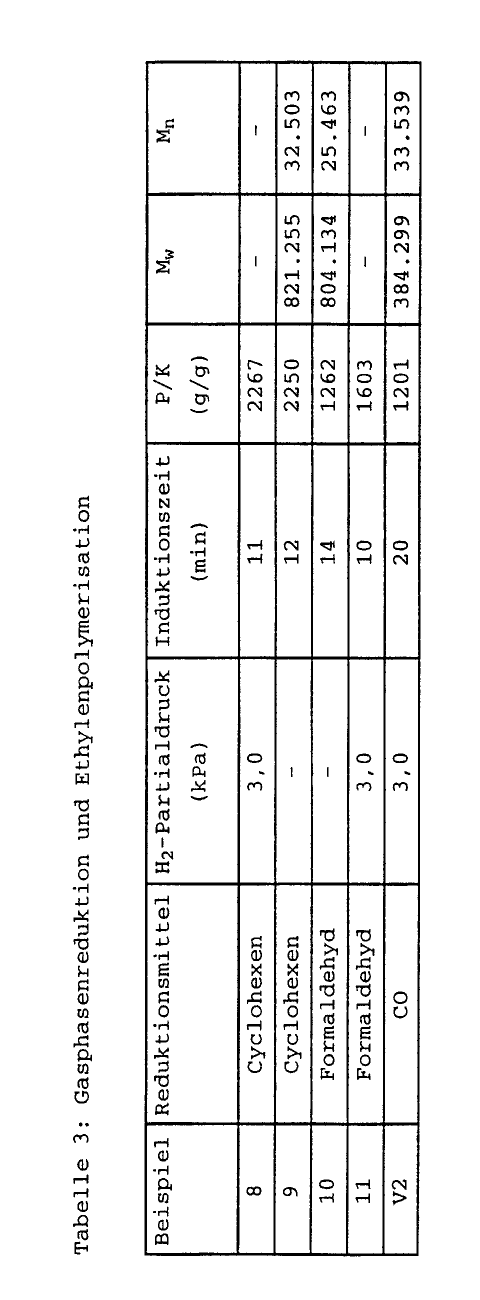

Die Beispiele zeigen, daß die Induktionsperioden bis zur ersten Ethylenaufnahme bei den erfindungsgemäß reduzierten Katalysatoren der Beispiele 8 bis 11 gegenüber dem Vergleichsbeispiel V2 verkürzt worden sind. Außerdem wird gezeigt, daß das Polyethylen aus den Versuchen der Beispiele 9 bis 10 höhere Molekulargewichte Mw als das Polyethylen aus dem Vergleichsbeispiel V2 besitzt.

## Patentansprüche

1. Katalysatorsysteme, welche für die Polymerisation von Ethylen und Alk-1-enen geeignet sind, enthaltend als aktive Bestandteile
A) eine chromhaltige Komponente, erhältlich durch die Reduktion eines Phillips-Katalysators mit organischen Verbindungen ausgewählt aus der Gruppe der linearen C₄- bis C₁₀- oder cyclischen C₃- bis C₁₀-Alkene mit mindestens einer internen C=C-Doppelbindung, des 1,3-Butadiens, der C₂- bis C₁₀-Alkine und der C₁- bis C₁₀-Aldehyde,
und gegebenenfalls
B) eine Organometallverbindung der ersten, zweiten, dritten oder vierten Hauptgruppe oder der zweiten Nebengruppe des Periodensystems der Elemente.

2. Katalysatorsysteme nach Anspruch 1, wobei die organischen Verbindungen ausgewählt werden aus der Gruppe der linearen C₄- bis C₁₀- oder cyclischen C₃- bis C₁₀-Monoalkene mit interner C=C-Doppelbindung, C₂- bis C₁₀-Monoalkine und C₁- bis C₁₀-Monoaldehyde.

3. Verfahren zur Herstellung von Katalysatorsystemen gemäß Anspruch 1 oder 2 durch
a) Beladung eines porösen anorganischen Feststoffs mit einer Chromverbindung,
b) Oxidation des so erhältlichen Feststoffs und
c) Behandlung des oxidierten Feststoffs mit einem Reduktionsmittel,
d) gegebenenfalls Zusatz einer Organometallverbindung der ersten, zweiten, dritten oder vierten Hauptgruppe oder der zweiten Nebengruppe des Periodensystems der Elemente,
**dadurch gekennzeichnet, daß** man als Reduktionsmittel organische Verbindungen ausgewählt aus der Gruppe der linearen C₄- bis C₁₀- oder cyclischen C₃- bis C₁₀-Alkene mit mindestens einer internen C=C-Doppelbindung, des 1,3-Butandiens, der C₂- bis C₁₀- Alkine und der C₁- bis C₁₀-Aldehyde verwendet.

4. Verfahren zur Herstellung von Katalysatorsystemen nach Anspruch 3, **dadurch gekennzeichnet, daß** man als Reduktionsmittel organische Verbindungen ausgewählt aus der Gruppe der linearen C₄- bis C₁₀- oder cyclischen C₃- bis C₁₀-Monoalkene mit interner C=C-Doppelbindung, C₂- bis C₁₀-Monoalkine und C₁bis C₁₀-Monoaldehyde verwendet.

5. Verfahren zur Herstellung von Poly(alk-1-enen) durch Polymerisation von Alk-1-enen in Gegenwart eines reduzierten Phillips-Katalysatorsystems , **dadurch gekennzeichnet, daß** man als reduziertes Phillips-Katalysatorsystem eines gemäß Anspruch 1 oder 2 verwendet.

## Claims

1. A catalyst system which is suitable for polymerizing ethylene and 1-alkenes, comprising as active constituents
A) a chromium-containing component obtainable by reducing a Phillips catalyst with organic compounds selected from the group of linear C₄-C₁₀- or cyclic C₃-C₁₀-alkenes with at least one internal C=C double bond, of 1,3-butadiene, of C₂-C₁₀-alkynes and of C₁-C₁₀-aldehydes,
with or without
B) an organometallic compound of the first, second, third or fourth main group or of the second subgroup of the Periodic Table of the Elements.

2. A catalyst system as claimed in claim 1, wherein the organic compounds are selected from the group of linear C₄-C₁₀- or cyclic C₃-C₁₀-monoalkenes with internal C=C double bond, C₂-C₁₀-monoalkynes and C₁-C₁₀-monoaldehydes.

3. A process for preparing a catalyst system as claimed in claim 1 or 2 by
a) loading a porous inorganic solid with a chromium compound,
b) oxidizing the solid obtainable in this way and
c) treating the oxidized solid with a reducing agent,
d) where appropriate adding an organometallic compound of the first, second, third or fourth main group or of the second subgroup of the Periodic Table of the Elements,
wherein organic compounds selected from the group of linear C₄-C₁₀- or cyclic C₃-C₁₀-alkenes with at least one internal C=C double bond, of 1,3-butadiene, of C₂-C₁₀-alkynes and of C₁-C₁₀-aldehydes are used as reducing agents.

4. A process for preparing a catalyst system as claimed in claim 3, wherein organic compounds selected from the group of linear C₄-C₁₀- or cyclic C₃-C₁₀-monoalkenes with internal C=C double bond, C₂-C₁₀-monoalkynes and C₁-C₁₀-monoaldehydes are used as reducing agents.

5. A process for preparing poly(1-alkenes) by polymerizing 1-alkenes in the presence of a reduced Phillips catalyst system, wherein the reduced Phillips catalyst system used is one as claimed in claim 1 or 2.

## Revendications

1. Systèmes de catalyseur, qui conviennent pour la polymérisation d'éthylène et d'alc-1-ènes, contenant comme constituants actifs
A) un composant contenant du chrome, pouvant être obtenu par réduction d'un catalyseur de Phillips avec des composés organiques choisis dans le groupe des alcènes linéaires en C₄ à C₁₀ ou cycliques en C₃ à C₁₀ avec au moins une double liaison C=C interne, du 1,3-butadiène, des alcynes en C₂ à C₁₀ et des aldéhydes en C₁ à C₁₀,
et éventuellement
B) un composé organométallique du premier, deuxième, troisième ou quatrième groupe principal ou du deuxième groupe secondaire de la classification périodique des éléments.

2. Systèmes de catalyseur selon la revendication 1, dans lesquels les composés organiques sont choisis dans le groupe des monoalcènes linéaires en C₄ à C₁₀ ou cycliques en C₃ à C₁₀ avec double liaison C=C interne, des monoalcynes en C₂ à C₁₀ et des monoaldéhydes en C₁ à C₁₀.

3. Procédé pour la préparation de systèmes de catalyseur selon la revendication 1 ou 2, par
a) traitement d'un solide inorganique poreux avec un composé de chrome,
b) oxydation du solide ainsi obtenu et
c) traitement du solide oxydé avec un agent réducteur,
d) éventuellement addition d'un composé organométallique du premier, deuxième, troisième ou quatrième groupe principal ou du deuxième groupe secondaire de la classification périodique des éléments,
**caractérisé par le fait qu'**on utilise comme agent réducteur des composés organiques choisis dans le groupe des alcènes linéaires en C₄ à C₁₀ ou cycliques en C₃ à C₁₀ avec au moins une double liaison C=C interne, du 1,3-butadiène, des alcynes en C₂ à C₁₀ et des aldéhydes en C₁ à C₁₀.

4. Procédé pour la préparation de systèmes de catalyseur selon la revendication 3, **caractérisé par le fait qu'**on utilise comme agent réducteur des composés organiques choisis dans le groupe des monoalcènes linéaires en C₄ à C₁₀ ou cycliques en C₃ à C₁₀ avec double liaison C=C interne, des monoalcynes en C₂ à C₁₀ et des monoaldéhydes en C₁ à C₁₀.

5. Procédé pour la préparation de poly(alc-1-ènes) par polymérisation d'alc-1-ènes en présence d'un système catalyseur de Phillips réduit, **caractérisé par le fait qu'**on utilise comme système catalyseur de Phillips réduit un système selon la revendication 1 ou 2.
